# FASCICULE DE BREVET EUROPEEN

(11) **EP 1 920 957 B1**
(45) Date de publication et mention de la délivrance du brevet: **14.12.2011**
(21) Numéro de dépôt: 07119787.5
(22) Date de dépôt: 31.10.2007
(51) Int. Cl.: B60J 1/16, E05B 65/08, E05C 9/08, E05D 15/10

(54) **Dispositif de verrouillage à poignée rotative et levier pivotant pour panneau coulissant, dispositif d'obturation et véhicule automobile correspondants.**
Verschlussvorrichtung mit verdrehbarem Griff und Kipphebel für Schiebefenster, sowie entsprechendes Schiebefenster und Kraftfahrzeug
Locking device with rotating handle and pivoting lever for a sliding panel, sliding panal and automobile with such a locking device

(30) Priorité: 07.11.2006 FR 0609717
(43) Date de publication de la demande: 14.05.2008
(73) Titulaire: Advanced Comfort Systems France SAS - ACS France, 79300 Bressuire (FR)
(72) Inventeur: Sanchez, Luc, 86190, Frozes (FR); Tarzaim, Karim, 85200, Fontenay Le Comte (FR)
(74) Mandataire: Bioret, Ludovic

(56) Documents cités:
- EP-A- 1 659 247
- EP-A1- 0 857 844
- EP-A1- 0 972 663
- WO-A-2007/046779

## Description

### 1. Domaine de l'invention

Le domaine de l'invention est celui des baies de véhicules automobiles. Plus précisément, l'invention concerne les dispositifs d'obturation d'une baie ménagée dans la carrosserie d'un véhicule, ou dans une portière du véhicule, et comprenant une partie mobile coulissante, susceptible de libérer ou de fermer une ouverture ménagée dans ces dispositifs.

### 2. Solutions de l'art antérieur

Classiquement, pour obturer une baie d'un véhicule, qu'il s'agisse d'une automobile, d'un véhicule utilitaire, d'un camion, d'un autobus ou d'un wagon de chemin de fer, on rapporte une vitre, maintenue par un cadre de liaison. Ce dernier présente une partie interne et une partie externe, qui viennent pincer simultanément les bords de la glace et de l'ouverture ménagée dans la carrosserie, avec une garniture d'étanchéité.

La technique la plus couramment répandue pour l'ouverture et la fermeture d'une vitre de portière est de rendre celle-ci mobile verticalement dans son propre plan, en la faisant pénétrer ou sortir du caisson ou de la garniture de la portière. On connaît également des panneaux coulissants horizontalement, le long de rails formés dans un cadre.

Une autre technique a été proposée par le titulaire de la présente demande de brevet. Cette technique est notamment décrite dans les documents de brevet EP-0 778 168 et EP-0 857 844. Le dispositif d'obturation (appelé par la suite « baie flush ») présenté dans ces documents comprend un ensemble fixe et une partie mobile par rapport à cet ensemble fixe. La partie mobile est reliée à l'ensemble fixe par des éléments fonctionnels qui assurent la mobilité requise et qui sont rapportés sur la face de la partie fixe tournée vers l'intérieur du véhicule.

Une telle baie « flush » peut être montée intégralement indépendamment du véhicule, et rapportée, depuis l'extérieur, dans le logement défini à cet effet sur la carrosserie du véhicule. Elle peut également être solidarisée, en particulier par collage à la partie inférieure d'une portière, selon la technique décrite dans le document de brevet EP-1 022 172.

Sur le plan esthétique, la baie « flush » présente, vue de l'extérieur, un aspect lisse, affleurant avec la carrosserie, du fait qu'aucun cadre n'est nécessaire.

Pour assurer un coulissement de la partie mobile, constituée généralement par un panneau transparent, on prévoit par exemple un dispositif de guidage comportant un premier et un second rail de guidage montés fixes sur l'ensemble fixe de la baie (ou structure fixe), de part et d'autre de l'ouverture fermée par le panneau mobile. Celui-ci est monté sur les rails, pour coulisser par exemple selon une direction longitudinale, dans un plan de coulissement entre une (ou plusieurs) position d'ouverture et une position intermédiaire de dégagement dans laquelle il est en regard de la baie et dégagé de celle-ci.

L'invention se rapporte plus particulièrement à ce type de dispositif d'obturation appelé « baie flush » coulissante, à ses variantes et ses perfectionnements. Toutefois, l'invention peut de façon plus large s'appliquer à tous les dispositifs d'obturation dont la cinématique d'ouverture et/ou de fermeture inclut un déplacement (en y) entre une position d'ouverture et une position intermédiaire de dégagement, dans un plan parallèle au plan de l'ensemble fixe, et un déplacement (en x) dans ce plan parallèle.

### 3. Inconvénients de l'art antérieur

Plusieurs solutions ont été proposées pour le verrouillage du panneau mobile dans la position fermée, et le cas échéant dans des positions d'ouverture choisies. Elles sont souvent peu ergonomiques et/ou pratiques, et nécessitent notamment de procéder à un effort, par exemple de serrage, pour obtenir le verrouillage.

Parmi celles-ci, on connaît une technique présentée dans le document EP-1 659 247, selon laquelle on prévoit au moins un pêne coopérant avec une gâche formée dans un des éléments de support et/ou de guidage, la gâche présentant au moins une rampe, de façon que le passage d'une position verrouillée à une position déverrouillée des moyens de verrouillage entraîne le passage du panneau mobile d'un premier plan vers un second plan, et inversement. Deux pênes peuvent être prévus, pour verrouiller efficacement le panneau mobile en parties haute et basse.

Cette approche est efficace, sur le plan fonctionnel. Cependant, elle reste peu ergonomique, du fait que le déplacement du pêne est perpendiculaire à l'axe de coulissement, ce qui suppose des manipulations peu aisées. Ceci est encore plus vrai dans le cas où deux pênes sont prévus.

Le document WO 2007/046779 A (publié le 26.04.2007 et donc compris dans l'état de la technique selon l'article 54 (3) CBE) divulgue un dispositif de verrouillage d'un panneau coulissant d'un véhicule automobile, mobile par rapport à une structure fixe, comprenant au moins deux premiers pions de guidage mobiles dans au moins un premier rail de ladite structure fixe, au moins un desdits au moins deux premiers pions est mobile entre une position de coulissement et une position de verrouillage, dans laquelle ledit pion coopère avec au moins un élément de verrouillage complémentaire prévu à cet effet sur ledit rail, et en ce qu'il comprend des moyens formant levier solidaires du ou desdits pions, mobiles en rotation selon un axe de rotation sensiblement perpendiculaire à l'axe de coulissement dudit panneau coulissant et sensiblement parallèle au plan défini par ledit panneau coulissant, de façon à contrôler le passage dudit pion de ladite position de coulissement vers ladite position de verrouillage, et réciproquement. Ce dispositif n'assure pas le verrouillage du panneau coulissant en position fermée.

### 4. Objectifs de l'invention

L'invention a notamment pour objectif de pallier ces inconvénients de l'art.

Plus précisément, l'invention a pour objectif de proposer un dispositif de verrouillage d'un panneau coulissant d'une baie, simplifiant les opérations d'ouverture et de fermeture de ce panneau, et le verrouillage de celui-ci en position fermée, et le cas échéant en position ouverte, sans cisailler les joints d'étanchéité.

L'invention a également pour objectif de fournir un tel dispositif qui permette un verrouillage, un déverrouillage et un coulissement fiable et sans effort.

Ainsi, un objectif particulier de l'invention est de fournir un tel dispositif, qui permette de commander facilement le coulissement du panneau mobile, quel que soit le sens de déplacement (ouverture ou fermeture).

Un autre objectif de l'invention est de fournir un tel dispositif, qui soit simple et peu coûteux.

L'invention a encore pour objectif de fournir un dispositif d'obturation d'une baie qui reste simple à réaliser, et à monter sur une portière ou sur un véhicule.

Un autre objectif de l'invention est de fournir un tel dispositif d'obturation d'une baie qui conserve l'ensemble des avantages des « baies flush » déjà développées par le titulaire de la présente demande, et notamment :
- aspect esthétique affleurant ;
- aspects aérodynamiques ;
- facilité et coût réduit de fabrication ;
- facilité et coût réduit de montage.

### 5. Principes généraux de l'invention

Ces objectifs, ainsi que d'autres qui apparaîtront plus clairement par la suite, sont atteints à l'aide d'un dispositif de verrouillage d'un panneau coulissant d'un véhicule automobile, mobile par rapport à une structure fixe, comprenant au moins deux premiers pions de guidage mobiles dans au moins un premier rail de ladite structure fixe.

Selon l'invention, au moins un desdits au moins deux premiers pions est mobile entre une position de coulissement et une position de verrouillage, dans laquelle ledit pion coopère avec au moins un élément de verrouillage complémentaire prévu à cet effet sur ledit rail, et ledit dispositif de verrouillage comprend des moyens formant levier solidaires du ou desdits pions, mobiles en rotation selon un axe de rotation sensiblement perpendiculaire à l'axe de coulissement dudit panneau coulissant et sensiblement parallèle au plan défini par ledit panneau coulissant, de façon à contrôler le passage dudit pion de ladite position de coulissement vers ladite position de verrouillage, et réciproquement.

Ainsi, le dispositif exploite, de façon inventive, les pions de guidage déjà montés classiquement sur les panneaux coulissants des dispositifs d'obturation des baies de véhicule, et en particulier sur les « baie flush », dans la fonction de verrouillage du panneau mobile, ce mécanisme pouvant être mis en oeuvre, comme présenté par la suite, par simple actionnement d'une poignée.

En outre le dispositif présente des qualités de simplicité de mise en oeuvre et de fiabilité puisque le verrouillage d'un pion de guidage est mis en oeuvre à partir d'une mise en mobilité d'un seul levier monté sur pivot.

L'invention concerne également un dispositif de déverrouillage conformé comme et/ou compatible avec un dispositif de verrouillage tel que décrit ci-dessus.

Selon un mode de réalisation particulièrement avantageux, lesdits moyens formant levier sont solidaires d'une tige s'étendant selon une direction parallèle audit axe de rotation et pourvue d'une poignée de commande.

Ainsi, le panneau peut être verrouillé ou déverrouillé par simple actionnement d'une poignée de commande en rotation.

Au plan ergonomique, ce mouvement correspond à un mouvement naturel, la poignée étant prévue pour être avantageusement tirée, ou réciproquement poussée par l'utilisateur. Le verrouillage, le déverrouillage mais aussi la mise ne mouvement d'un panneau coulissant de baie s'en trouve donc facilité pour l'utilisateur.

Préférentiellement, le ou lesdits pions sont conformés de façon que l'entraînement en rotation desdits moyens formant levier entraîne le passage dudit panneau d'une première position de déverrouillage, dans laquelle ledit panneau est sensiblement compris dans un plan parallèle à celui de ladite structure fixe, dans une deuxième position de verrouillage, dans laquelle ledit panneau est sensiblement compris dans le plan de ladite structure fixe, et réciproquement.

Plus généralement, il peut être prévu que le panneau reste en permanence sensiblement parallèle « à lui-même », ou plus exactement au plan défini par la baie. Un tel mouvement du panneau, outre d'être esthétique, réduit les risques que la baie ne soit pas étanche en position verrouillée, puisque le panneau peut être plaqué de façon uniforme sur le joint d'étanchéité.

On notera que le terme « sensiblement » signifie qu'il peut y avoir des jeux, des décalages ou des déplacements qui ne sont pas parfaitement rectilignes, du fait de la structure et de la forme de la baie et du véhicule, des matériaux, des tolérances, de l'usure...

Selon une caractéristique avantageuse, au moins deux desdits pions sont solidaires de moyens formant levier sensiblement identiques.

Ainsi, on peut simplifier le fonctionnement du dispositif d'ouverture et d'autre part diminuer le coût de revient de la baie.

Selon une autre caractéristique avantageuse, au moins deux desdits moyens formant levier sont reliés par une tringle, de façon à transmettre le mouvement de rotation appliqué à un premier desdits moyens formant levier à au moins un deuxième desdits moyens formant levier.

Ainsi, par la mise en oeuvre d'une disposition simple, le panneau peut rester en permanence sensiblement parallèle au plan défini par la baie.

Préférentiellement, au moins un desdits moyens formant levier est solidaire d'un patin mobile dans ledit premier rail.

Ainsi, grâce au patin, on augmente la surface d'appui du panneau sur le rail et, d'autre part, on guide l'axe du levier suivant la direction de coulissement du rail.

De façon avantageuse, un tel dispositif de verrouillage comprend des moyens de rattrapage de jeu selon une direction sensiblement perpendiculaire audit axe de coulissement dudit panneau coulissant, coopérant avec lesdits moyens formant levier et le ou lesdits patins.

Ainsi, la position du panneau peut être réglée à une hauteur prédéterminée par rapport au rail.et maintenue à cette hauteur quant bien même se produit une déformation, une usure, ou un déplacement entre les éléments du dispositif de verrouillage

Selon un aspect avantageux, le ou lesdits pions présentent une forme oblongue et/ou sont reliés par un pivot audit ou auxdits patins.

Ainsi, du fait de la forme allongée des pions, la surface d'appui des pions peut être accrue, par exemple, pour mieux supporter des panneaux mobiles de masse importante.

Préférentiellement, ledit élément de verrouillage complémentaire comprend une gorge définissant sensiblement un arc de cercle ou un quart de disque.

De façon préférentielle, au moins un desdits moyens formant levier coopère avec des moyens de rappel tendant à le ramener dans un état de verrouillage.

Ainsi, lorsque la poignée est relâchée, le panneau se verrouille automatiquement.

Selon un mode de réalisation particulièrement avantageux, un tel dispositif de verrouillage comprend au moins un second pion de guidage et/ou de verrouillage dudit panneau mobile, mobile dans un second rail de ladite structure fixe, coopérant avec au moins un élément de verrouillage complémentaire prévus à cet effet sur ledit second rail, et ledit second pion est solidarisé à l'un desdits premiers pions, de façon à verrouiller ledit panneau coulissant simultanément auxdits premier et second rails.

Ainsi, on verrouille symétriquement, et donc de façon plus efficace, le panneau mobile sur au moins deux de ses bords opposés par actionnement d'une seule poignée.

L'invention concerne encore un dispositif d'obturation d'une baie d'un véhicule et un véhicule automobile comprenant au moins un panneau coulissant, mobile par rapport à une structure fixe et au moins un des dispositifs de verrouillage décrits ci-dessus.

### 6. Liste des figures

D'autres caractéristiques et avantages de l'invention apparaîtront plus clairement à la lecture de la description suivante de deux modes de réalisation préférentiels, donnés à titre de simples exemples illustratifs et non limitatifs, et des dessins annexés, parmi lesquels :
- la figure 1 illustre un premier mode de réalisation de l'invention ;
- la figure 2 est une vue éclatée du dispositif de verrouillage/déverrouillage correspondant à l'invention mis en oeuvre dans ce premier mode de réalisation de l'invention ;
- les figures 3A à 3C illustrent respectivement le dispositif :
   - en état déverrouillé;
   - en état partiellement déverrouillé; et
   - en état verrouillé (dans une vue partiellement en coupe) ;
- la figure 4 présente en vue de dessus le mouvement du panneau coulissant au cours de l'opération de verrouillage ;
- la figure 5 illustre un autre mode de réalisation de l'invention, selon lequel au moins un pion de guidage de forme oblongue est mis en oeuvre.

### 7. Description d'un mode de réalisation particulier de l'invention

Comme déjà indiqué, le principe général de l'invention repose notamment sur l'utilisation des pions de guidage dans la fonction de verrouillage/déverrouillage du panneau coulissant, complémentaire de la fonction de guidage, et sur la mise en oeuvre de leviers pour permettre le déport du panneau coulissant dans un plan parallèle au plan du panneau fixe au cours de la phase de déverrouillage, par translation.

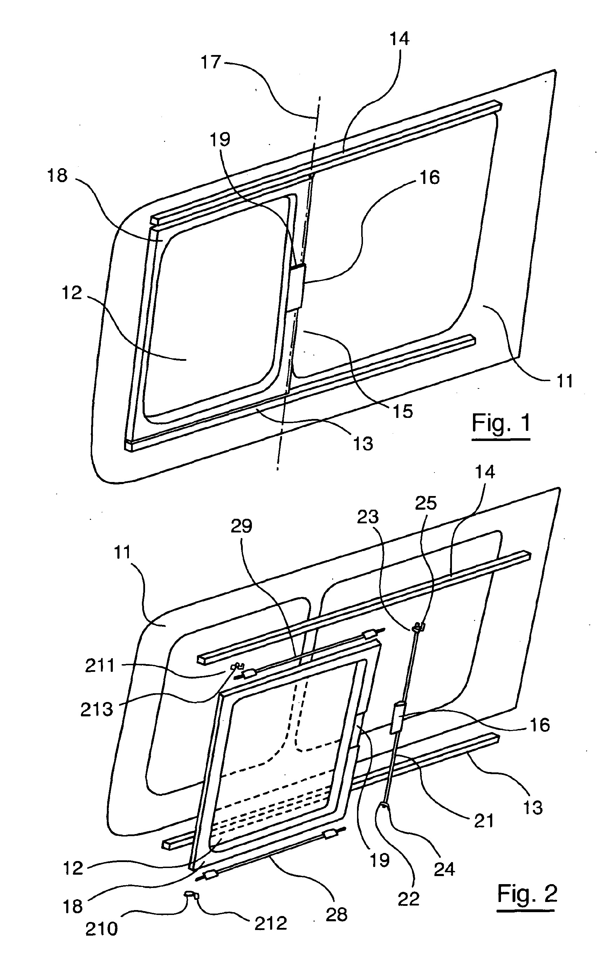

La figure 1 illustre un dispositif d'obturation d'une baie ménagée dans une paroi latérale de la carrosserie d'un véhicule, mettant en oeuvre un dispositif de verrouillage selon l'invention. Ce dispositif d'obturation comprend une structure fixe, encore appelée ensemble fixe ou panneau fixe, 11 sur laquelle est montée un panneau coulissant mobile 12, en l'occurrence une vitre, susceptible de coulisser le long d'un premier rail 13 et d'un second rail 14, sensiblement parallèles et montés en partie supérieure et en partie inférieure de l'ensemble fixe 11. Ces rails 13 et 14 sont rapportés sur la face tournée vers l'intérieur du véhicule de l'ensemble fixe.

Dans ce mode de réalisation, le panneau fixe 11 et le panneau mobile 12 sont sensiblement verticaux, et le panneau 12 peut coulisser tout en étant guidé dans les rails 13 et 14 selon une direction sensiblement horizontale.

De façon à permettre le verrouillage ou le déverrouillage du panneau 12, un dispositif de verrouillage (ou de déverrouillage) 15 peut être actionné en tirant, respectivement poussant, progressivement sur une poignée 16 de commande de la fermeture/ouverture et/ou du verrouillage/déverrouillage du panneau coulissant 12, mobile autour d'un axe 17 de rotation sensiblement vertical, comme précisé par la suite.

Avantageusement, un logement 19 est défini dans le cadre 18 du panneau mobile 12, pour recevoir la poignée 16 de façon à ce que la poignée soit sensiblement affleurante avec la surface du cadre 18. Par ailleurs, la poignée peut comprendre des zones ergonomiques pour faciliter sa préhension.

En référence à la figure 2, on présente de façon plus détaillée les éléments constitutifs du dispositif de verrouillage 15 de la figure 1, en vue éclatée.

La poignée de commande 16 du dispositif de verrouillage (ou de déverrouillage) 15 est fixée sur une tige 21 s'étendant sur sensiblement toute la hauteur du panneau 12. Dans une variante de ce mode de réalisation, la poignée peut être intégrée à la tige 21.

Chaque extrémité de la tige 21 est solidarisée à un premier bras de moyens formant levier, encore appelé levier, le levier inférieur 22 et le levier supérieur 23 étant identiques dans ce mode de réalisation. Ces leviers 22 et 23 sont mobiles en rotation autour de l'axe vertical 17 et se prolongent par un deuxième bras, portant des pions de guidage 24 et 25 du panneau 12 respectivement dans les rails 13 et 14, et un troisième bras, articulé par rapport au panneau 12.

Chaque premier pion de guidage 24, respectivement second pion de guidage 25, est prévu pour coopérer avec un élément de verrouillage complémentaire 26 ou 27 (non représentés sur la figure 2) formé dans le rail 13, respectivement 14.

Une tringle inférieure 28 et une tringle supérieure 29, reliées respectivement aux leviers 22 et 23, transmettent respectivement le mouvement de ces premiers leviers 22, 23 à des deuxièmes leviers 210, 211, pouvant pivoter autour d'un axe vertical, et portant chacun un pion de guidage 212, 213.

Ainsi chaque bord inférieur ou supérieur du panneau 12 est guidé par les pions 24 et 212, ou 25 et 213, dans le rail 13 ou 14.

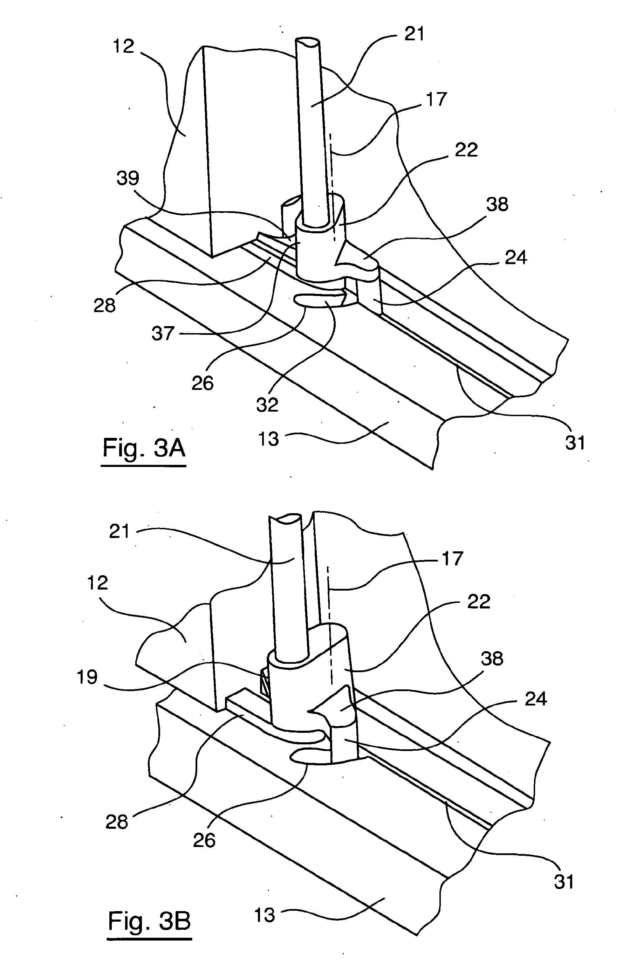

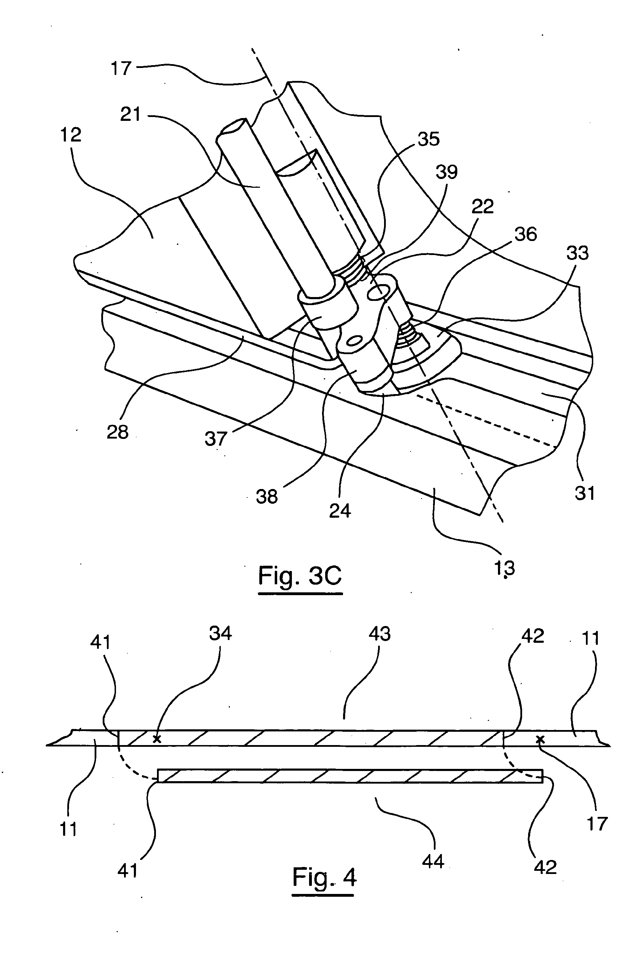

On précise le mouvement du pion 24 et du levier 22 au cours du verrouillage du panneau 12 en référence aux figures successives 3A à 3C, dans une vue de détail de la zone délimitant l'extrémité inférieure de la tige 21. Les mouvements décrits résultent de l'actionnement de la poignée 16 de la position de déverrouillage, pour laquelle la poignée est alignée dans une direction perpendiculaire au plan du panneau 12, à la position de verrouillage pour laquelle la poignée 16 est accueillie dans le logement 19, et dans l'alignement du panneau 12. Plus précisément, la figure 3A représente le dispositif de verrouillage en position de déverrouillage, sur la figure 3B est représentée une position intermédiaire du dispositif de verrouillage entre la position de déverrouillage et de verrouillage, et la figure 3C représente ce dispositif en position verrouillée dans une vue partiellement en coupe.

On notera qu'au cours du déverrouillage du panneau 12, le pion ou le levier opèrent ces mouvements en ordre inverse.

Dans la position déverrouillée (figure 3A), le pion de guidage 24 peut coulisser dans le chemin de guidage 31 du rail 13 ou être engagé dans l'élément de verrouillage complémentaire 26, présentant la forme d'une gorge 32 en arc de cercle.

Un patin 33 (voir figure 3C), placé sous le levier 22 et articulé par rapport à ce dernier suivant l'axe de rotation 17, permet de compléter le dispositif de guidage en translation du panneau 12 dans le rail 13. Le patin 33 s'appuie sur la face interne du rail 13 orientée vers l'extérieur du véhicule et empêche ainsi le déplacement de l'axe 17 suivant une direction perpendiculaire à l'axe du rail. Ce patin 33 supporte par ailleurs des moyens de rattrapage du jeu 36, mis en oeuvre dans ce mode de réalisation par un ressort hélicoïdal, pour maintenir le levier 22 à une hauteur fonctionnelle prédéterminée.

En actionnant la poignée 16 dans le sens horaire, et/ou sous l'action des moyens de rappel 35 tendant à ramener le levier 24 dans un état de verrouillage, la tige 21, fixée au premier bras 37 du levier 22, pivote autour de l'axe de rotation 17 du levier 22 en entraînant en rotation le levier 22 et le pion 24 (situé sur le deuxième bras 38) dans ce même sens. Le pion 24 s'engage alors progressivement dans l'élément de verrouillage complémentaire 26 (voir figure 3B). Simultanément, le panneau mobile 12, articulé en rotation par rapport au troisième bras 39 du levier 24, orienté sensiblement suivant dans une direction perpendiculaire à celle du premier bras par rapport à l'axe 17, se rapproche progressivement du plan du panneau fixe 11 dans un mouvement de rotation du bord gauche et du bord droit du panneau 12 respectivement par rapport à l'axe 17 du levier 22 et à l'axe 34 (non représenté) du levier 210.

Lorsque la poignée 16 parvient en position verrouillée (figure 3C), le pion de guidage 24 se trouve dans une position stable, en butée dans le fond de la gorge 32 de l'élément de verrouillage.

Le mouvement du panneau au cours de son verrouillage est illustré à la figure 4 dans une vue de dessus.

Comme déjà décrit ci-dessus, les bords gauche 41 et droit 42 du panneau 12 décrivent sensiblement un quart de tour autour des axes 17 et 34, ce mouvement étant transmis entre les deux leviers 24 et 210 par la tringle inférieure 28 et entre les deux leviers 25 et 211 par la tringle inférieure 29. On constate également que, par suite, dans toutes les positions occupées par le panneau, et notamment entre la position de verrouillage 43 et la position de déverrouillage, ou position de dégagement maximal 44, celui-ci conserve en permanence une orientation sensiblement parallèle à celle du panneau fixe 11, créant ainsi un effet esthétique de « louvoiement ». En outre un tel mouvement permet aux joints d'étanchéité montés sur le panneau coulissant 12 d'être comprimés de façon homogène et simultanément, de façon à éviter un pincement inapproprié des bandes de joint lors du verrouillage (fermeture) ou du déverrouillage (ouverture) du panneau 12.

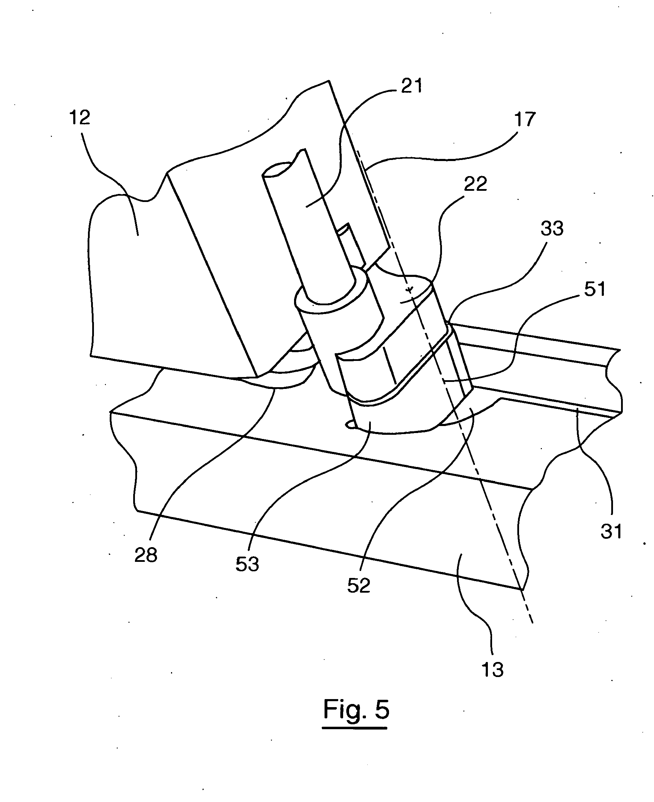

Un autre mode de réalisation de l'invention, illustré par la figure 5 en position verrouillée, prévoit que le ou les pions de guidage 53 présente(-nt) un forme oblongue et peut (-vent) être articulé(s) en pivotement par rapport au patin 33, support du levier 22, suivant un axe de rotation 51, confondu avec l'axe 17. Un tel pion 53, solidaire du levier 22, est destiné à pivoter dans un élément de verrouillage complémentaire 52 en forme de quart de disque, lorsque la poignée est actionnée. Ainsi, en position déverrouillée, le pion 53 est orienté suivant sa plus grande extension suivant le chemin du rail 13 ce qui permet son coulissement.

On notera que, dans ce mode de réalisation particulier, la surface d'appui du pion par rapport au rail peut être importante de façon à supporter un panneau mobile de grande masse ou de grande largeur.

Dans encore un autre mode de réalisation particulier de l'invention, il peut être envisagé, afin de permettre de verrouiller le panneau coulissant 12 dans plusieurs positions intermédiaires au cours de son coulissement, de former sur les rails inférieur et/ou supérieur 13 et 14 une pluralité d'autres éléments de verrouillage complémentaires, de préférence suivant un espacement régulier. Ces éléments de verrouillage complémentaires seront prévus avec une forme adaptée, notamment pour permettre de décaler la position du panneau 12 par rapport au plan du panneau fixe en position verrouillée.

Il peut également être prévu, sans sortir du cadre de l'invention, de prévoir :
- des moyens de motorisation pour le verrouillage/déverrouillage du panneau mobile pouvant être mis en route grâce à un bouton de commande déporté ;
- de faire varier le nombre de pions de guidage et leur point d' accrochage ;
- d'associer à la poignée un bouton anti-effraction permettant d'empêcher la manoeuvre de la poignée de commande.

Il peut en outre être envisagé d'équiper tout type de baies horizontales, latérales ou arrières avec un dispositif d'obturation comprenant un dispositif de verrouillage selon l'invention.

## Revendications

1. Dispositif de verrouillage (15) d'un panneau coulissant (12) d'un véhicule automobile, mobile par rapport à une structure fixe (11), comprenant au moins deux premiers pions de guidage (24, 25, 212, 213) mobiles dans au moins un premier rail (13, 14) de ladite structure fixe,
**caractérisé en ce qu'**au moins un desdits au moins deux premiers pions est mobile entre une position de coulissement et une position de verrouillage, dans laquelle ledit pion coopère avec au moins un élément de verrouillage complémentaire (26; 52) prévu à cet effet sur ledit rail, pour le verrouillage du panneau coulissant (12) en position fermée, et **en ce qu'**il comprend des moyens formant levier (22, 23, 210, 211) solidaires du ou desdits pions, mobiles en rotation selon un axe de rotation (17; 34; 51) sensiblement perpendiculaire à l'axe de coulissement dudit panneau coulissant et sensiblement parallèle au plan défini par ledit panneau coulissant (12), de façon à contrôler le passage dudit pion de ladite position de coulissement vers ladite position de verrouillage, et réciproquement.

2. Dispositif de verrouillage selon la revendication 1, **caractérisé en ce que** lesdits moyens formant levier sont solidaires d'une tige (21) s'étendant selon une direction parallèle audit axe de rotation et pourvue d'une poignée de commande (16).

3. Dispositif de verrouillage selon l'une quelconque des revendications 1 et 2, **caractérisé en ce que** le ou lesdits pions sont conformés de façon que l'entraînement en rotation desdits moyens formant levier (22, 23, 210, 211) entraîne le passage dudit panneau d'une première position de déverrouillage, dans laquelle ledit panneau est sensiblement compris dans un plan parallèle à celui de ladite structure fixe, dans une deuxième position de verrouillage, dans laquelle ledit panneau est sensiblement compris dans le plan de ladite structure fixe, et réciproquement.

4. Dispositif de verrouillage selon l'une quelconque des revendications 1 à 3, **caractérisé en ce que** au moins deux desdits pions (24, 25, 212, 213) sont solidaires de moyens formant levier (22, 23, 210, 211) sensiblement identiques.

5. Dispositif de verrouillage selon la revendication 4, **caractérisé en ce que** au moins deux desdits moyens formant levier (22, 23, 210, 211) sont reliés par une tringle (28, 29), de façon à transmettre le mouvement de rotation appliqué à un premier desdits moyens formant levier à au moins un deuxième desdits moyens formant levier.

6. Dispositif de verrouillage selon l'une quelconque des revendications 1 à 5, **caractérisé en ce qu'**au moins un desdits moyens formant levier est solidaire d'un patin (33) mobile dans ledit premier rail (13, 14).

7. Dispositif de verrouillage selon la revendication 6, **caractérisé en ce qu'**il comprend des moyens de rattrapage de jeu (36) selon une direction sensiblement perpendiculaire audit axe de coulissement dudit panneau coulissant, coopérant avec lesdits moyens formant levier et le ou lesdits patins.

8. Dispositif de verrouillage selon l'une quelconque des revendications 6 et 7, **caractérisé en ce que** le ou lesdits pions (24, 25, 212, 213) présentent une forme oblongue et/ou sont reliés par un pivot audit ou auxdits patins (33).

9. Dispositif de verrouillage selon l'une quelconque des revendications 1 à 8, **caractérisé en ce que** ledit élément de verrouillage complémentaire (26) comprend une gorge (32 ; 52) définissant sensiblement un arc de cercle ou un quart de disque.

10. Dispositif de verrouillage selon l'une quelconque des revendications 1 à 9, **caractérisé en ce que** au moins un desdits moyens formant levier coopère avec des moyens de rappel (36) tendant à le ramener dans un état de verrouillage.

11. Dispositif de verrouillage selon l'une quelconque des revendications 1 à 10, **caractérisé en ce qu'**il comprend au moins un second pion de guidage et/ou de verrouillage (24, 25, 212, 213) dudit panneau mobile (12), mobile dans un second rail (14) de ladite structure fixe (11), coopérant avec au moins un élément de verrouillage complémentaire prévus à cet effet sur ledit second rail,
et **en ce que** ledit second pion est solidarisé à l'un desdits premiers pions, de façon à verrouiller ledit panneau coulissant simultanément auxdits premier et second rails.

12. Dispositif d'obturation d'une baie d'un véhicule automobile, comprenant au moins un panneau coulissant (12), mobile par rapport à une structure fixe (11), **caractérisé en ce qu'**il comprend au moins un dispositif de verrouillage (15) dudit panneau coulissant (12), comprenant au moins deux premiers pions de guidage (24, 25, 212, 213) mobiles dans au moins un premier rail (13, 14) de ladite structure fixe selon l'une quelconque des revendications 1 à 11,
au moins un desdits au moins deux premiers pions étant mobile entre une position de coulissement et une position de verrouillage, dans laquelle ledit pion coopère avec au moins un élément de verrouillage complémentaire (26; 52) prévu à cet effet sur ledit rail, pour le verrouillage du panneau coulissant (12) en position fermée,
et ledit dispositif de verrouillage (15) comprenant des moyens formant levier (22, 23, 210, 211) solidaires du ou desdits pions, mobiles en rotation selon un axe de rotation (17; 34; 51) sensiblement perpendiculaire à l'axe de coulissement dudit panneau coulissant et sensiblement parallèle au plan défini par ledit panneau coulissant (12), de façon à contrôler le passage dudit pion de ladite position de coulissement vers ladite position de verrouillage, et réciproquement.

13. Véhicule automobile comprenant au moins un panneau coulissant (12) mobile par rapport à une structure fixe (11), **caractérisé en ce qu'**il comprend au moins un dispositif de verrouillage (15) dudit panneau coulissant (12), comprenant au moins deux premiers pions de guidage (24, 25, 212, 213) mobiles dans au moins un premier rail (13, 14) de ladite structure fixe selon l'une quelconque des revendications 1 à 11,
au moins un desdits au moins deux premiers pions étant mobile entre une position de coulissement et une position de verrouillage, dans laquelle ledit pion coopère avec au moins un élément de verrouillage complémentaire (26; 52) prévu à cet effet sur ledit rail, pour le verrouillage du panneau coulissant (12) en position fermée,
et ledit dispositif de verrouillage (15) comprenant des moyens formant levier (22, 23, 210, 211) solidaires du ou desdits pions, mobiles en rotation selon un axe de rotation (17; 34; 51) sensiblement perpendiculaire à l'axe de coulissement dudit panneau coulissant et sensiblement parallèle au plan défini par ledit panneau coulissant (12), de façon à contrôler le passage dudit pion de ladite position de coulissement vers ladite position de verrouillage, et réciproquement.

## Claims

1. Locking device (15) of a sliding panel (12) of an automobile, movable in relation to a fixed structure (11), comprising at least two first guide pins (24, 25, 212, 213) movable in at least a first rail (13, 14) of said fixed structure,
**characterised in that** at least one of said at least two first pins is movable between a sliding position and a locking position, in which said pin cooperates with at least one complementary locking element (26; 52) provided for this purpose on said rail, for the locking of the sliding panel (12) in closed position, and **in that** it comprises means forming a lever (22, 23, 210, 211) integral with said pin or pins, movable in rotation along a rotation axis (17; 34; 51) substantially perpendicular to the sliding axis of said sliding panel and substantially parallel to the plane defined by said sliding panel (12), so as to control the passage of said pin from said sliding position towards said locking position, and vice versa.

2. Locking device according to claim 1, **characterised in that** said means forming a lever are integral with a rod (21) extending according to a direction parallel to said rotation axis and provided with a control handle (16).

3. Locking device according to any of claims 1 and 2, **characterised in that** the said pin or pins are shaped in such a way that the driving in rotation of said means forming a lever (22, 23, 210, 211) drives the passage of said panel from a first locking position, wherein said panel is substantially included in a plane parallel to that of said fixed structure, in a second locking position, wherein said panel is substantially included in the plane of said fixed structure, and vice versa.

4. Locking device according to any of claims 1 to 3, **characterised in that** at least two of said pins (24, 25, 212, 213) are integral with means forming a lever (22, 23, 210, 211) that are substantially identical.

5. Locking device according to claim 4, **characterised in that** at least two of said means forming a lever (22, 23, 210, 211) are connected by a rod (28, 29), in such a way as to transmit the movement of rotation applied to a first of said means forming a lever to at least one second of said means forming a lever.

6. Locking device according to any of claims 1 to 5, **characterised in that** at least one of said means forming a lever is integral with a shoe (33) movable in said first rail (13, 14).

7. Locking device according to claim 6, **characterised in that** it comprises means of recalling the play (36) according to a direction substantially perpendicular to said sliding axis of said sliding panel, cooperating with said means forming a lever and said shoe or shoes.

8. Locking device according to any of claims 6 and 7, **characterised in that** said pin or pins (24, 25, 212, 213) have an oblong shape and/or are connected by a pivot to said shoe or shoes (33).

9. Locking device according to any of claims 1 to 8, **characterised in that** said complementary locking element (26) comprises a groove (32; 52) defining substantially an arc of circle or a quarter of a disc.

10. Locking device according to any of claims 1 to 9, **characterised in that** at least one of said means forming a lever cooperates with means of return (36) tending to return it to a locked state.

11. Locking device according to any of claims 1 to 10, **characterised in that** it comprises at least one second guide and/or locking (24, 25, 212, 213) pin of said movable panel (12), movable in a second rail (14) of said fixed structure (11), cooperating with at least one complementary locking element provided for this purpose on said second rail,
and **in that** said second pin is integral with one of said first pins, so as to lock said sliding panel simultaneously to said first and second rails.

12. Device for blocking a bay of an automobile, comprising at least one sliding panel (12), movable in relation to a fixed structure (11), **characterised in that** it comprises at least one locking device (15) of said sliding panel (12), comprising at least two first guide pins (24, 25, 212, 213) movable in at least one first rail (13, 14) of said fixed structure according to any of claims 1 to 11,
at least one of said at least two first pins being movable between a sliding position and a locking position, in which said pin cooperates with at least one complementary locking element (26; 52) provided for this purpose on said rail, for the locking of the sliding panel (12) in closed position, and said locking device (15) comprising means forming a lever (22, 23, 210, 211) integral with said pin or pins, movable in rotation along a rotation axis (17; 34; 51) substantially perpendicular to the sliding axis of said sliding panel and substantially parallel to the plane defined by said sliding panel (12), so as to control the passage of said pin from said sliding position towards said locking position, and vice versa.

13. Automobile comprising at least one sliding panel (12) movable in relation to a fixed structure (11), **characterised in that** it comprises at least one locking device (15) of said sliding panel (12), comprising at least two first guide pins (24, 25, 212, 213) movable in at least one first rail (13, 14) of said fixed structure according to any of claims 1 to 11,
at least one of said at least two first pins being movable between a sliding position and a locking position, wherein said pin cooperates with at least one complementary locking element (26; 52) provided for this purpose on said rail, for the locking of the sliding panel (12) in closed position,
and said locking device (15) comprising means forming a lever (22, 23, 210, 211) integral with said pin or pins, movable in rotation along a rotation axis (17; 34; 51) substantially perpendicular to the sliding axis of said sliding panel and substantially parallel to the plane defined by said sliding panel (12), so as to control the passage of said pin from said sliding position towards locking position, and vice versa.

## Patentansprüche

1. Verriegelungsvorrichtung (15) eines Schiebefensters (12) eines Kraftfahrzeugs, das im Verhältnis zu einer festen Struktur (11) beweglich ist, umfassend mindestens zwei erste Führungsstifte (24, 25, 212, 213), die in mindestens einer ersten Schiene (13, 14) der festen Struktur beweglich sind,
**dadurch gekennzeichnet, dass** mindestens einer der mindestens zwei ersten Stifte zwischen einer Schiebeposition und einer Verriegelungsposition, in welcher der Stift mit mindestens einem ergänzenden Verriegelungselement (26; 52) zusammenwirkt, das zu diesem Zweck auf der Schiene bereitgestellt wird, für die Verriegelung des Schiebefensters (12) in der geschlossenen Position beweglich ist,
und dass sie Hebelmittel (22, 23, 210, 211) umfasst, die mit dem Stift bzw. den Stiften fest verbunden sind und gemäß einer Rotationsachse (17; 34; 51) drehbeweglich sind, die zur Schiebeachse des Schiebefensters im Wesentlichen senkrecht und zu der durch das Schiebefenster (12) definierten Ebene im Wesentlichen parallel ist, um den Übergang des Stiftes von der Schiebeposition in die Verriegelungsposition und umgekehrt zu steuern.

2. Verriegelungsvorrichtung gemäß Anspruch 1, **dadurch gekennzeichnet, dass** die Hebelmittel, mit einer Stange (21) fest verbunden sind, die sich in einer Richtung parallel zur Rotationsachse erstreckt und mit einem Bedienungsgriff (16) versehen ist.

3. Verriegelungsvorrichtung gemäß einem der Ansprüche 1 und 2, **dadurch gekennzeichnet, dass** der Stift bzw. die Stifte derart ausgebildet sind, dass der Drehantrieb der Hebelmittel (22, 23, 210, 211) den Übergang des Fensters von einer ersten Verriegelungsposition, in der das Fenster im Wesentlichen in einer Ebene liegt, die zu derjenigen der festen Struktur parallel ist, in eine zweite Verriegelungsposition, in der die Scheibe in der Ebene der festen Struktur liegt, und umgekehrt bewirkt.

4. Verriegelungsvorrichtung gemäß einem der Ansprüche 1 bis 3, **dadurch gekennzeichnet, dass** mindestens zwei der Stifte (24, 25, 212, 213) mit im Wesentlichen identischen Hebelmitteln (22, 23, 210, 211) fest verbunden sind.

5. Verriegelungsvorrichtung gemäß Anspruch 4, **dadurch gekennzeichnet, dass** mindestens zwei der Hebelmittel (22, 23, 210, 211) über ein Gestänge (28, 29) verbunden sind, um die Rotationsbewegung, die auf ein erstes der Hebelmittel ausgeübt wird, auf mindestens ein zweites der Hebelmittel übertragen wird.

6. Verriegelungsvorrichtung gemäß einem der Ansprüche 1 bis 5, **dadurch gekennzeichnet, dass** mindestens eines der Hebelmittel mit einem Gleitschuh (33), der in der ersten Schiene (13, 14) beweglich ist, fest verbunden ist.

7. Verriegelungsvorrichtung gemäß dem Anspruch 6, **dadurch gekennzeichnet, dass** sie Mittel zum Nachstellen des Spiels (36) in einer Richtung, die zur Schiebeachse des Schiebefensters im Wesentlichen rechtwinklig ist, umfasst, die mit den Hebelmitteln und dem Gleitschuh bzw. den Gleitschuhen zusammenwirken.

8. Verriegelungsvorrichtung gemäß einem der Ansprüche 6 und 7, **dadurch gekennzeichnet, dass** der Stift bzw. die Stifte (24, 25, 212, 213) eine längliche Form aufweist bzw. aufweisen und/oder über einen Drehzapfen mit dem Gleitschuh bzw. den Gleitschuhen (33) verbunden ist bzw. sind.

9. Verriegelungsvorrichtung gemäß einem der Ansprüche 1 bis 8, **dadurch gekennzeichnet, dass** das ergänzende Verriegelungselement (26) eine Nut (32; 52) umfasst, die im Wesentlichen einen Kreisbogen oder eine Viertelscheibe definiert.

10. Verriegelungsvorrichtung gemäß einem der Ansprüche 1 bis 9, **dadurch gekennzeichnet, dass** mindestens eines der Hebelmittel mit Rückstellmitteln (36) zusammenwirkt, die dazu neigen, dieses in einen Verriegelungszustand zurückzubringen.

11. Verriegelungsvorrichtung gemäß einem der Ansprüche 1 bis 10, **dadurch gekennzeichnet, dass** sie mindestens einen zweiten Führungs- und/oder Verriegelungsstift (24, 25, 212, 213) des beweglichen Fensters (12) umfasst, der in einer zweiten Schiene (14) der festen Struktur (11) beweglich ist und mit mindestens einem ergänzenden Verriegelungselement zusammenwirkt, das dazu auf der zweiten Schiene bereitgestellt wird,
und dass der zweite Stift mit einem der ersten Stifte fest verbunden ist, um das Schiebefenster gleichzeitig mit der ersten und zweiten Schiene zu verriegeln.

12. Vorrichtung zum Verschließen einer Kraftfahrzeugöffnung, umfassend mindestens ein Schiebefenster (12), das im Verhältnis zu einer festen Struktur (11) beweglich ist, **dadurch gekennzeichnet, dass** sie mindestens eine Verriegelungsvorrichtung (15) des Schiebefensters (12) umfasst, umfassend mindestens zwei erste Führungsstifte (24, 25, 212, 213), die in mindestens einer ersten Schiene (13, 14) der festen Struktur nach einem der Ansprüche 1 bis 11 beweglich sind,
wobei mindestens einer der zwei ersten Stifte zwischen einer Schiebeposition und einer Verriegelungsposition, in welcher der Stift mit mindestens einem ergänzenden Verriegelungselement (26; 52) zusammenwirkt, das zu diesem Zweck auf der Schiene bereitgestellt wird, zum Verriegeln des Schiebefensters (12) in der geschlossenen Position beweglich ist,
und wobei die Verriegelungsvorrichtung (15) Hebelmittel (22, 23, 210, 211) umfasst, die mit dem Stift bzw. den Stiften fest verbunden sind und gemäß einer Rotationsachse (17; 34; 51) drehbeweglich sind, die zur Schiebeachse des Schiebefensters im Wesentlichen senkrecht und zu der durch das Schiebefenster (12) definierten Ebene im Wesentlichen parallel ist, um den Übergang des Stiftes von der Schiebeposition in die Verriegelungsposition und umgekehrt zu steuern.

13. Kraftfahrzeug, umfassend mindestens ein Schiebefenster (12), das im Verhältnis zu einer festen Struktur (11) beweglich ist, **dadurch gekennzeichnet, dass** es mindestens eine Verriegelungsvorrichtung (15) des Schiebefensters (12) umfasst, die mindestens zwei erste Führungsstifte (24, 25, 212, 213) umfasst, die in mindestens einer ersten Schiene (13, 14) der festen Struktur nach einem der Ansprüche 1 bis 11 beweglich sind,
wobei mindestens einer der zwei ersten Stifte zwischen einer Schiebeposition und einer Verriegelungsposition, in welcher der Stift mit mindestens einem ergänzenden Verriegelungselement (26; 52) zusammenwirkt, das zu diesem Zweck auf der Schiene bereitgestellt wird, zum Verriegeln des Schiebefensters (12) in der geschlossenen Position beweglich ist,
und wobei die Verriegelungsvorrichtung (15) Hebelmittel (22, 23, 210, 211) umfasst, die mit dem Stift bzw. den Stiften fest verbunden sind und gemäß einer Rotationsachse (17; 34; 51) drehbeweglich sind, die zur Schiebeachse des Schiebefensters im Wesentlichen senkrecht und zu der durch das Schiebefenster (12) definierten Ebene im Wesentlichen parallel ist, um den Übergang des Stiftes von der Schiebeposition in die Verriegelungsposition und umgekehrt zu steuern.
